# EUROPÄISCHE PATENTSCHRIFT

(11) **EP 1 201 947 B1**
(45) Veröffentlichungstag und Bekanntmachung des Hinweises auf die Patenterteilung: **25.01.2006**
(21) Anmeldenummer: 01124195.7
(22) Anmeldetag: 11.10.2001
(51) Int. Cl.: F16C 11/06

(54) **Vorrichtung zur gelenkigen Verbindung eines Betätigungsorgans mit einer einen Kugelkopf aufweisenden Betätigungsstange**
Device for articulating an actuating member on an operating rod having a ball head
Dispositif d'articulation d'un organe de manoeuvre sur une tige de commande présentant une tête de rotule

(30) Priorität: 30.10.2000 DE 10053819
(43) Veröffentlichungstag der Anmeldung: 02.05.2002
(73) Patentinhaber: FTE automotive GmbH, 96106 Ebern (DE)
(72) Erfinder: Kühn, Alexander, 96106 Ebern (DE); Gebert, Stefan, 96242 Gestungshausen (DE); Keller, Christoph, 97711 Massbach (DE)
(74) Vertreter: Oppermann, Mark

(56) Entgegenhaltungen:
- EP-A- 0 229 350
- DE-A- 4 424 062
- DE-A- 19 833 030
- US-A- 4 225 261
- US-A- 4 527 925

## Beschreibung

Die vorliegende Erfindung bezieht sich auf eine Vorrichtung zur gelenkigen Verbindung eines Betätigungsorgans mit einer einen Kugelkopf aufweisenden Betätigungsstange gemäß dem Oberbegriff des Patentanspruchs 1. Insbesondere bezieht sich die Erfindung auf eine Vorrichtung zur gelenkigen Verbindung eines Betätigungsorgans in Form eines Pedals mit einer an einem Kolben eines Hydraulikzylinders befestigten Kolbenstange.

Derartige Vorrichtungen kommen beispielsweise bei Kraftfahrzeugen zum Einsatz, wenn es gilt, ein an einem Pedalbock angelenktes Pedal betätigungswirksam mit einem einen Kugelkopf aufweisenden Ende einer Kolbenstange zu verbinden, deren anderes Ende am Kolben eines Kupplungsgeber- oder Hauptbremszylinders angelenkt ist. Dabei sind zwischen den sich während eines Arbeitsspiels in ihrer Winkellage relativ zueinander bewegenden Teilen Pedal und Kolbenstange je nach dem, ob das Pedal be- oder entlastet wird, Druck- oder Zugkräfte über die Vorrichtung zu übertragen.

In der gattungsbildenden europäischen Patentschrift EP 0 229 350 B1 wird eine Gelenkverbindung offenbart, die ein einteiliges Einsatzteil aufweist, welches ein Pedal mit einem Kugelkopf einer Kolbenstange betätigungswirksam verbindet. Das aus Kunststoff bestehende Einsatzteil ist hierbei in einen im Querschnitt etwa U-förmigen Teil des Pedals eingeclipst und weist eine Lagerpfanne zur Aufnahme des Kugelkopfs auf. Die Lagerpfanne hat eine Hinterschneidung, in die der Kugelkopf in der Art einer Schnappverbindung eingedrückt werden kann und die dazu dient, den Kugelkopf im Betrieb in der Lagerpfanne zu halten. Eingangs der Lagerpfanne weist das Einsatzteil einen trichterförmigen Einführbereich auf. Bei der Montage der vorbekannten Gelenkverbindung wird der Kugelkopf durch den Einführbereich hindurch unter Überdrücken der Hinterschneidung in die Lagerpfanne eingedrückt. Im montierten Zustand dieser Gelenkverbindung bzw. im Betrieb erstreckt sich die Kolbenstange durch den Einführbereich hindurch.

Ein Nachteil dieses Stands der Technik ist darin zu sehen, daß insbesondere bei hohen Temperaturen die Gefahr besteht, daß der Kugelkopf unter stärkerer Zugbelastung an der Kolbenstange die Hinterschneidung der Lagerpfanne bleibend deformiert, was im Ergebnis zu einem unerwünschten Betätigungsspiel führen kann, schlimmstenfalls der Kugelkopf sogar aus der Lagerpfanne herausgezogen wird, wenn etwa das Pedal aus seiner Betätigungsstellung unkontrolliert in seine Ruhestellung zurückschnellt bzw. am Pedal gezogen wird.

Der Erfindung liegt die Aufgabe zugrunde, eine möglichst einfach ausgebildete Vorrichtung zur gelenkigen Verbindung eines Betätigungsorgans mit einer einen Kugelkopf aufweisenden Betätigungsstange zu schaffen, die eine zuverlässige und dauerhaft spielfreie bzw. -arme Verbindung zwischen Betätigungsorgan und Betätigungsstange gewährleistet.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 12.

Nach der Erfindung ist bei einer gattungsgemäßen Vorrichtung der von dem am Betätigungsorgan festlegbaren Grundkörper umgebene Aufnahmeabschnitt zur formschlüssigen Aufnahme des Kugelkopfs zweigeteilt, wobei der Grundkörper den einen Teil ausbildet, in den der Kugelkopf durch einen außerhalb des die Kolbenstange im Betrieb umgebenden Öffnungsbereichs liegenden Fügekanal hindurch einführbar ist, während ein in den Fügekanal einsetzbares Formteil den anderen Teil des Aufnahmeabschnitts ausbildet.

Durch diese Ausbildung der Gelenkverbindung ist ein gegenüber dem Stand der Technik größerer Hüllgrad des Kugelkopfs erzielbar, mit anderen Worten gesagt kann das Maß der Hinterschneidung des Aufnahmeabschnitts zur formschlüssigen Aufnahme des Kugelkopfs in Richtung des Öffnungsbereichs, d.h. der Richtung, in der im Betrieb der Hauptanteil der Betätigungskräfte wirkt, vergrößert werden. Die Montage der Gelenkverbindung behindert dies indes nicht, weil die Hinterschneidung des Aufnahmeabschnitts in Richtung des Öffnungsbereichs beim Fügen des Kugelkopfs nicht überdrückt werden muß, der Kugelkopf vielmehr durch den außerhalb des Öffnungsbereichs liegenden Fügekanal zum Grundkörper gefügt werden kann, bevor der Aufnahmeabschnitt durch Einsetzen des Formteils komplettiert wird. Erfindungsgemäß ist also - anders als bei dem oben diskutierten Stand der Technik - die Richtung, in der der Kugelkopf zum Grundkörper gefügt wird, verschieden von der Richtung, in der im Betrieb der Hauptanteil der Betätigungskräfte wirkt.

Im Ergebnis wird die Tragfähigkeit der Gelenkverbindung verbessert, so daß insbesondere bei erhöhten Temperaturen im Vergleich zum obigen Stand der Technik höhere Kräfte übertragen werden können, ohne daß Grundkörper und/oder Formteil bleibend verformt würden bzw. der Kugelkopf in unerwünschter Weise aus dem Grundkörper herausgezogen werden könnte. Somit werden eine dauerhafte Spielfreiheit bzw. -armut der Gelenkverbindung sowie eine erhöhte Ausziehsicherheit gewährleistet.

Nach der Lehre des Patentanspruchs 2 sind der Grundkörper und das Formteil zur Ausbildung der Teile des Aufnahmeabschnitts für den Kugelkopf jeweils mit einem Kugelkalottenabschnitt versehen, um eine möglichst verschleißarme Flächenanlage zwischen Kugelkopf und Aufnahmeabschnitt zu bewirken.

Grundsätzlich ist es möglich, daß der grundkörperseitige Teil des Aufnahmeabschnitts zur formschlüssigen Aufnahme des Kugelkopfs mit einem kleinen Hinterschnitt in Richtung des Fügekanals versehen ist, so daß der Kugelkopf bei der Montage der Gelenkverbindung in den Grundkörper eingeschnappt werden kann, bevor das Formteil in den Fügekanal eingesetzt wird. Bevorzugt ist jedoch die Ausbildung entsprechend dem Patentanspruch 3, gemäß dem die lichte Weite des Fügekanals im Grundkörper an jeder Stelle des Fügekanals größer oder gleich dem Durchmesser des Kugelkopfs ist. Dies ermöglicht zum einen in vorteilhafter Weise ein im wesentlichen kraftloses Fügen des Kugelkopfs zum Grundkörper. Zum anderen wird die Herstellung des entsprechend dem Patentanspruch 12 vorzugsweise aus Kunststoff spritzgegossenen Grundkörpers vereinfacht, weil keine Zwangsentformung des Grundkörpers notwendig ist und damit keine bestimmte Entformungsreihenfolge eingehalten werden muß. Hinzu kommt hier, daß eine in Richtung des Fügekanals hinterschnittsfreie Ausbildung des grundkörperseitigen Teils des Aufnahmeabschnitts für den Kugelkopf in wirtschaftlicher Weise ein umgehendes Entformen des Grundkörpers aus der Spritzgießform nach dem Spritzgießvorgang gestattet. Wäre in Richtung des Fügekanals ein Hinterschnitt am Grundkörper vorgesehen, müßte der spritzgegossene Grundkörper erst eine vorbestimmte Zeit abkühlen, bevor er aus der Spritzgießform ausgeformt werden könnte; andernfalls bestünde die Gefahr, daß der Hinterschnitt beim Ausformen des noch warmen Grundkörpers bleibend verformt werden würde, was zu einem unerwünschten Spiel im Betrieb der Gelenkverbindung führen könnte.

Der Patentanspruch 4 sieht vor, daß das Formteil mittels einer Schnappverbindung am Grundkörper festlegbar ist. Diese Maßnahme erleichtert die Montage der Gelenkverbindung, weil das in den Fügekanal des Grundkörpers eingesetzte Formteil beim Fügen des Grundkörpers zum Betätigungsorgan nicht aus dem Fügekanal des Grundkörpers herausfallen kann. Zweckmäßig weist der Fügekanal eine Aussparung zur formschlüssigen Aufnahme des Formteils auf, wie im Patentanspruch 5 angegeben, wobei die Aussparung zur formschlüssigen Aufnahme des Formteils entsprechend dem Patentanspruch 6 am offenen Ende des Fügekanals ein nach innen vorspringendes Profil hat, welches als Bestandteil der Schnappverbindung das Formteil in seinem in den Fügekanal eingesetzten Zustand hintergreift.

Nach der Lehre des Patentanspruchs 7 ist der Grundkörper mit Rastnasen versehen, die in Ausnehmungen des Betätigungsorgans einrastbar sind, um den Grundkörper formschlüssig am Betätigungsorgan festzulegen. Diese Ausbildung des Grundkörpers ist einer einfachen und kostengünstigen Montage der Gelenkverbindung förderlich.

Gemäß dem Patentanspruch 8 ist der Grundkörper in der Draufsicht gesehen zweckmäßig im wesentlichen U-förmig ausgebildet, mit einer Basis, in welcher der eine Teil des Aufnahmeabschnitts zur formschlüssigen Aufnahme des Kugelkopfs ausgeformt ist, und zwei sich von der Basis wegerstreckenden Schenkeln, welche die Rastnasen tragen und den Öffnungsbereich für die Betätigungsstange begrenzen. Ist hierbei die Basis des Grundkörpers auf der vom Aufnahmeabschnitt zur formschlüssigen Aufnahme des Kugelkopfs abgewandten Seite mit einem Querschlitz versehen, wie im Patentanspruch 9 angegeben, kann der Grundkörper auf einfache Weise definiert am Betätigungsorgan lagepositioniert werden.

Der Patentanspruch 10 sieht vor, daß der Grundkörper und/oder das Formteil mit Vorsprüngen versehen ist, die in vorteilhafter Weise dem Ausgleich etwaiger Toleranzen dienen. Sind die Vorsprünge an dem Grundkörper und/oder dem Formteil entsprechend dem Patentanspruch 11 auf ihrer beim Fügen zum Betätigungsorgan dem Betätigungsorgan zugewandten Seite mit jeweils einer Schräge versehen, so erleichtert dies die Montage der Gelenkverbindung.

Im folgenden wird die Erfindung anhand eines bevorzugten Ausführungsbeispiels unter Bezugnahme auf die beigefügte teilweise schematische Zeichnung näher erläutert. Darin zeigen:
- Fig. 1: eine perspektivische Darstellung einer erfindungsgemäßen Vorrichtung zur gelenkigen Verbindung einer mit einem Kugelkopf versehenen Kolbenstange mit einem nicht gezeigten Pedal, wobei der Kugelkopf in einen einen Teil eines Aufnahmeabschnitts zur formschlüssigen Aufnahme des Kugelkopfs bildenden Grundkörper eingelegt ist, ein den Aufnahmeabschnitt komplettierendes Formteil aber noch nicht zum Grundkörper gefügt ist,
- Fig. 2: eine perspektivische Darstellung der in Fig. 1 gezeigten Vorrichtung, bei der das Formteil zur Komplettierung des Aufnahmeabschnitts zum Grundkörper gefügt ist,
- Fig. 3: eine Längsschnittansicht der in Fig. 2 gezeigten Vorrichtung, die in einen Aufnahmeabschnitt eines lediglich abgebrochen dargestellten Pedals eingefügt ist,
- Fig. 4: eine perspektivische Darstellung des Grundkörpers der in den Fig. 1 bis 3 gezeigten Vorrichtung in einem anderen Maßstab,
- Fig. 5: eine Längsschnittansicht des in Fig. 4 gezeigten Grundkörpers,
- Fig. 6: eine Draufsicht auf den in Fig. 4 gezeigten Grundkörper,
- Fig. 7: eine vergrößerte abgebrochene Schnittansicht des Grundkörpers entsprechend der Linie A-A in Fig. 6, die entgegen dem Uhrzeigersinn um 90° in der Zeichnungsebene gedreht ist,
- Fig. 8: eine Unteransicht des in Fig. 4 gezeigten Grundkörpers,
- Fig. 9: eine vergrößerte Draufsicht auf das Formteil der in den Fig. 1 bis 3 gezeigten Vorrichtung,
- Fig. 10: eine Vorderansicht des in Fig. 9 gezeigten Formteils,
- Fig. 11: eine vergrößerte Darstellung des Details X in Fig. 10,
- Fig. 12: eine Schnittansicht des Formteils entsprechend der Linie B-B in Fig. 9 und
- Fig. 13: eine Unteransicht des in Fig. 9 gezeigten Formteils.

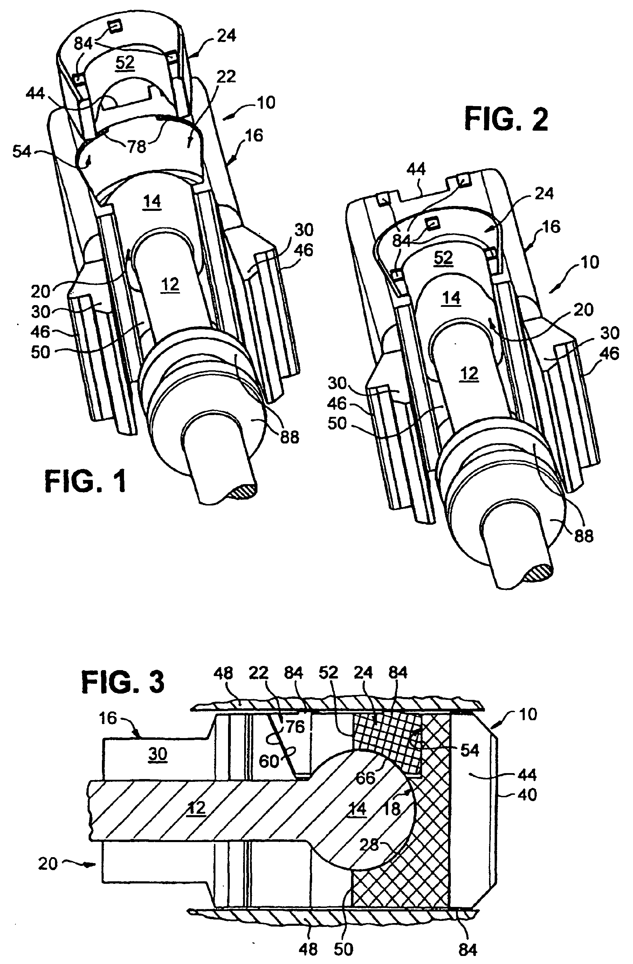

Die Fig. 1 bis 3 zeigen eine Vorrichtung 10 zur gelenkigen Verbindung eines nicht näher dargestellten Pedals mit einer Kolbenstange 12, die einen Kugelkopf 14 aufweist. Die Vorrichtung 10 hat einen Grundkörper 16, der auf noch näher zu beschreibende Weise am Pedal festlegbar ist. Der Grundkörper 16 umgibt einen in Fig. 3 allgemein mit 18 gekennzeichneten Aufnahmeabschnitt, der der formschlüssigen Aufnahme des Kugelkopfs 14 dient, und weist einen Öffnungsbereich 20 auf, durch den sich die Kolbenstange 12 im montierten Zustand der Vorrichtung 10 bzw. im Betrieb hindurch erstreckt. Wesentlich ist, daß der Aufnahmeabschnitt 18 zweigeteilt ist, wie noch näher erläutert werden wird, wobei der Grundkörper 16 den einen Teil ausbildet, in den der Kugelkopf 14 durch einen außerhalb des Öffnungsbereichs 20 bzw. versetzt zum Öffnungsbereich 20 liegenden, in Fig. 1 allgemein mit 22 gekennzeichneten Fügekanal hindurch einführbar ist, während ein in den Fügekanal 22 einsetzbares Formteil 24 den anderen Teil des Aufnahmeabschnitts 18 ausbildet.

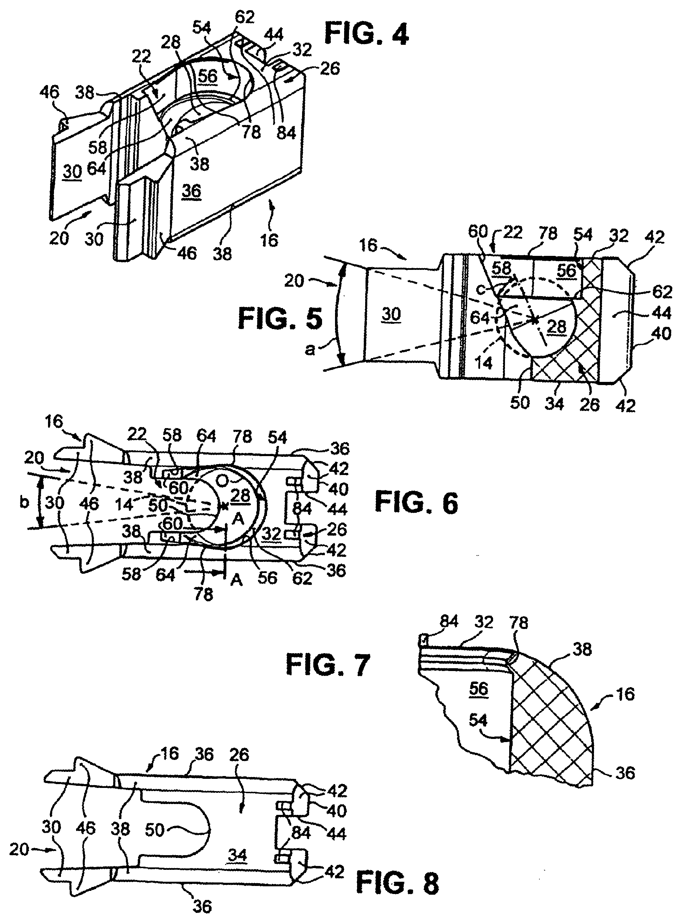

In den Fig. 4 bis 8 ist der aus einem Kunststoff wie POM (Polyoxymethylen) spritzgegossene Grundkörper 16 näher gezeigt. Der Grundkörper 16 ist in der Draufsicht gemäß Fig. 6 gesehen im wesentlichen U-förmig ausgebildet, mit einer Basis 26, in welcher der eine Teil des Aufnahmeabschnitts 18 zur formschlüssigen Aufnahme des Kugelkopfs 14 in der Form eines Kugelkalottenabschnitts 28 ausgeformt ist, und zwei sich von der Basis 26 wegerstreckenden, spiegelbildlich ausgebildeten Schenkeln 30, die den Öffnungsbereich 20 seitlich begrenzen. Im Querschnitt gesehen hat der Grundkörper 16 eine im wesentlichen rechteckige Außenkontur mit verrundeten Ecken, die von einer ebenen oberen Fläche 32, einer ebenen unteren Fläche 34, zwei ebenen Seitenflächen 36 und verrundeten Randabschnitten 38 gebildet wird. Auf der vom Kugelkalottenabschnitt 28 abgewandten Seite der Basis 26 hat der Grundkörper 16 eine ebene Endfläche 40, die über Schrägen 42, welche das Fügen des Grundkörpers 16 zum Pedal erleichtern, an die obere Fläche 32, die untere Fläche 34 bzw. die Seitenflächen 36 anschließt. Ausgehend von der Endfläche 40 ist die Basis 26 des Grundkörpers 16 mittig mit einem Querschlitz 44 versehen, der mit dem Fügekanal 22 in einer Ebene liegt und der Lagepositionierung des Grundkörpers 16 am Pedal dient.

Die Schenkel 30 des Grundkörpers 16 tragen auf ihren voneinander abgewandten Außenseiten an die Seitenflächen 36 anschließende Rastnasen 46, die unter elastischer Verformung der Schenkel 30 in hier nicht dargestellte Ausnehmungen des Pedals einrastbar sind, um den Grundkörper 16 am Pedal festzulegen. Zu dem vorzugsweise aus Stahlblech oder Kunststoff bestehenden Pedal ist an dieser Stelle noch anzumerken, daß es eine im Querschnitt rechteckige Aufnahme für den Grundkörper 16 aufweist, die von Seitenwangen des Pedals und sich zwischen diesen erstreckenden, in Fig. 3 angedeuteten Stegen 48 begrenzt ist, wobei in den Seitenwangen die Aussparungen für die Rastnasen 46 vorgesehen sind. Ein sich zwischen den Stegen 48 des Pedals erstreckender Abschnitt, der im montierten Zustand der Vorrichtung 10 zur Lagepositionierung des Grundkörpers 16 formschlüssig in dessen Querschlitz 44 eingreift, ist in Fig. 3 der besseren Übersichtlichkeit halber nicht dargestellt.

Wie insbesondere den Fig. 6 und 8 entnommen werden kann, sind die am Übergang zwischen den Seitenflächen 36 und den Rastnasen 46 gemäß den Fig. 4 und 5 zu ihren Enden hin schmaler ausgebildeten Schenkel 30 des Grundkörpers 16 auf ihrer Innenseite leicht angeschrägt, um den Öffnungsbereich 20 für die Kolbenstange 12 zu vergrößern. In den Fig. 5 und 6 sind gestrichelt eingezeichnet der Kugelkopf 14 sowie Winkelbereiche a und b, innerhalb der sich die Mittelachse der Kolbenstange 12 im Öffnungsbereich 20 in zwei zueinander senkrecht stehenden Ebenen gesehen im Betrieb der Gelenkverbindung bewegt. Wie aus Fig. 6 ersichtlich ist, wird ein Verschwenken der Kolbenstange 12 über den Betriebswinkelbereich b hinaus durch die Schenkel 30 des Grundkörpers 16 behindert. Für z.B. Montagezwecke ist ein Verschwenken der Kolbenstange 12 über den in Fig. 5 gezeigten Betriebswinkelbereich a hinaus jedoch möglich, weil im dargestellten Ausführungsbeispiel sowohl.der Grundkörper 16 an seiner unteren Fläche 34 als auch das Formteil 24 mit einem entsprechenden Längsschlitz 50 (Fig. 3, 5 und 8) bzw. 52 (Fig. 3, 9 und 13) versehen ist.

Gemäß insbesondere Fig. 5 erstreckt sich der Fügekanal 22 für den Kugelkopf 14 ausgehend von der oberen Fläche 32 des Grundkörpers 16 bis zum Kugelkalottenabschnitt 28. In seinem in Fig. 5 oberen Bereich weist der Fügekanal 22 eine Aussparung 54 zur formschlüssigen Aufnahme des Formteils 24 auf. Diese Aussparung 54 ist seitlich durch einen Zylinderflächenabschnitt 56 mit einem Umfangswinkel größer 180°, der senkrecht zur oberen Fläche 32 des Grundkörpers 16 verläuft, zwei sich daran anschließende, einander gegenüberliegende ebene Seitenflächen 58, die miteinander einen Winkel einschließen und ebenfalls senkrecht zur oberen Fläche 32 verlaufen, sowie in Fig. 5 nach links durch zwei in einer Ebene liegende Schrägen 60 begrenzt, die unter einem Winkel zu der oberen Fläche 32 verlaufen. An die Aussparung 54 schließt sich in Richtung des Kugelkalottenabschnitts 28 über eine parallel zur oberen Fläche 32 verlaufende Schulter 62 ein Zylinderflächenabschnitt 64 an, dessen in Fig. 5 strichpunktiert eingezeichnete Mittellinie parallel zu den Schrägen 60 unter einem Winkel zur oberen Fläche 32 verläuft. Im dargestellten Ausführungsbeispiel ist der Durchmesser des Zylinderflächenabschnitts 64 im wesentlichen gleich dem Durchmesser des Kugelkopfs 14 bzw. des Kugelkalottenabschnitts 28, so daß die lichte Weite des Fügekanals 22 im Grundkörper 16 an jeder Stelle des Fügekanals 22 gleich bzw. größer dem Durchmesser des Kugelkopfs 14 ist. Wie die Fig. 5 und 6 zeigen, schneidet die Ebene der Schulter 62 den Zylinderflächenabschnitt 64 unter einem Winkel c kleiner 90°, so daß sich ein elliptischer Öffnungsquerschnitt O ergibt, dessen kleinere Achse dem Durchmesser des Kugelkopfs 14 entspricht. Es ist ersichtlich, daß somit der Kugelkopf 14 durch den Fügekanal 22 hindurch kraftlos, d.h. ohne Überdrücken einer Hinterschneidung zum Kugelkalottenabschnitt 28 gefügt werden kann.

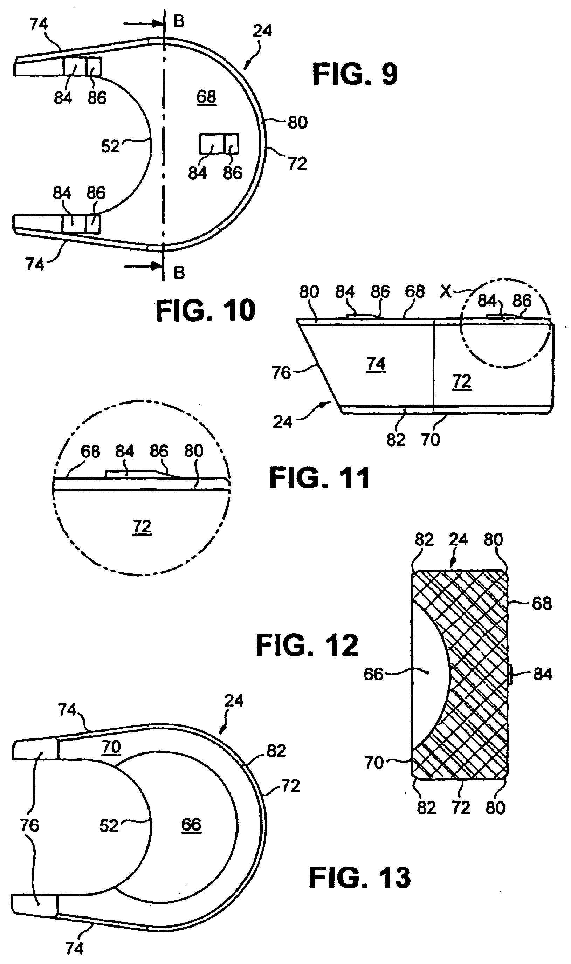

Auch das in den Fig. 9 bis 13 näher dargestellte Formteil 24 ist aus einem Kunststoff wie POM spritzgegossen und hat zur Ausbildung des anderen Teils des Aufnahmeabschnitts 18 für den Kugelkopf 14 einen Kugelkalottenabschnitt 66, dessen Radius ebenfalls dem Radius des Kugelkopfs 14 entspricht. Das infolge des Längsschlitzes 52 in den Ansichten entsprechend den Fig. 9 und 13 im wesentlichen sichelförmige Formteil 24 weist gemäß Fig. 10 eine ebene obere Fläche 68 und eine dazu parallele ebene untere Fläche 70 auf, in der der Kugelkalottenabschnitt 66 ausgebildet ist. Wie die Fig. 3 zeigt, ist der senkrechte Abstand zwischen der oberen Fläche 68 und der unteren Fläche 70 des Formteils 24 geringfügig kleiner als der Abstand zwischen der oberen Fläche 32 und der Schulter 62 des Grundkörpers 16, so daß sich im montierten Zustand der Vorrichtung 10, in der die Kugelkalottenabschnitte 28 und 66 flächig an dem Kugelkopf 14 anliegen, ein kleiner Spalt zwischen der unteren Fläche 70 des Formteils 24 und der Schulter 62 des Grundkörpers 16 ergibt.

Das Formteil 24 hat weiterhin entsprechend der Aussparung 54 des Grundkörpers 16 einen Zylinderflächenabschnitt 72, sich daran anschließende, einen Winkel miteinander einschließende Seitenflächen 74 sowie das Formteil 24 in den Fig. 10 und 13 nach links abschließende Schrägen 76. Dabei ist das Formteil 24 derart dimensioniert, daß im montierten Zustand der Vorrichtung 10 der Zylinderflächenabschnitt 72 des Formteils 24 flächig an dem Zylinderflächenabschnitt 56 des Grundkörpers 16 und die Seitenflächen 74 des Formteils 24 flächig an den Seitenflächen 58 des Grundkörpers 16 anliegen, während die Schrägen 76 des Formteils 24 geringfügig von den Schrägen 60 des Grundkörpers 16 beabstandet sind, was in der Darstellung gemäß Fig. 3 mit einer etwas dickeren Linie angedeutet ist.

Im dargestellten Ausführungsbeispiel ist das Formteil 24 mittels einer Schnappverbindung am Grundkörper 16 festgelegt. Dazu weist die am Grundkörper 16 vorgesehene Aussparung 54 zur formschlüssigen Aufnahme des Formteils 24 am offenen Ende des Fügekanals 22 ein in Fig. 7 vergrößert dargestelltes, nach innen vorspringendes Profil 78 auf, welches gemäß den Fig. 1, 4, 5 und 6 durch zwei bogenförmige Abschnitte gebildet ist, die sich in spiegelsymmetrischer Anordnung vom Zylinderflächenabschnitt 56 zu den Seitenflächen 58 der Aussparung 54 hin erstrecken. In dem in den Fügekanal 22 des Grundkörpers 16 eingesetzten Zustand des Formteils 24 hintergreift das Profil 78 das Formteil 24, wozu das Formteil 24 zwischen der oberen Fläche 68 und dem Zylinderflächenabschnitt 72 bzw. den Seitenflächen 74 mit einer Fase 80 versehen ist. Eine entsprechende Fase 82 ist aus Herstellungsgründen zwischen der unteren Fläche 70 und dem Zylinderflächenabschnitt 72 bzw. den Seitenflächen 74 des Formteils 24 vorgesehen.

Des weiteren sind im dargestellten Ausführungsbeispiel der Grundkörper 16 und das Formteil 24 an geeigneten Stellen auf der oberen Fläche 32 und der unteren Fläche 34 bzw. der oberen Fläche 68 mit Vorsprüngen oder Erhebungen 84 versehen, die beim Fügen der Vorrichtung 10 zum Pedal unter elastischer und ggf. plastischer Verformung dem Ausgleich etwaiger Toleranzen dienen. Wie insbesondere die vergrößerte Darstellung gemäß Fig. 11 zeigt, sind die Vorsprünge 84 auf ihrer beim Fügen zum Pedal dem Pedal zugewandten Seite mit jeweils einer Schräge 86 ausgebildet, um das Fügen zu erleichtern. Die Vorsprünge 84 sind gemäß Fig. 3 im montierten Zustand der Vorrichtung 10 mit den Stegen 48 des Pedals verpreßt.

Schließlich ist zu der in den Fig. 1 bis 3 abgebrochen dargestellten, aus Stahl oder Kunststoff bestehenden Kolbenstange 12 noch zu bemerken, daß diese an ihrem vom Kugelkopf 14 abgewandten Ende an einem nicht dargestellten Hydraulikkolben gelenkig befestigt und zwischen ihren Enden mit zwei Flanschen 88 versehen ist, von denen der vom Kugelkopf 14 abgewandte Flansch eine Anschlagfunktion zur Hubbegrenzung des Hydraulikkolbens in Druckrichtung hat und zwischen denen ein hier nicht gezeigter Faltenbalg des ebenfalls nicht dargestellten Hydraulikzylinders befestigt ist.

Zur Montage der oben beschriebenen Vorrichtung 10 wird der Kugelkopf 14 der Kolbenstange 12 im wesentlichen kraftlos durch den Fügekanal 22 hindurch in den Grundkörper 16 eingeführt, bis der Kugelkopf 14 flächig an dem Kugelkalottenabschnitt 28 des Grundkörpers 16 zur Anlage gelangt. Sodann wird das Formteil 24 in die Aussparung 54 des Fügekanals 22 eingesetzt, bis der Kugelkalottenabschnitt 66 des Formteils 24 flächig an dem Kugelkopf 14 zur Anlage gelangt. Im wesentlichen gleichzeitig verrastet das Formteil 24 hinter dem Profil 78 der Aussparung 54.

Die so vormontierte Einheit aus Grundkörper 16 und Formteil 24 wird dann mit dem dazwischen gehaltenen Kugelkopf 14 der Kolbenstange 12 von links in Fig. 3 in die Aussparung zwischen den Stegen 48 des Pedals geschoben, bis der in Fig. 3 nicht dargestellte Abschnitt zwischen den Stegen 48 des Pedals in den Querschlitz 44 des Grundkörpers 16 eingreift und der Grundkörper 16 mit seiner Endfläche 40 in der Aussparung des Pedals anschlägt. Während der Einschiebebewegung federn die Schenkel 30 des Grundkörpers 16 infolge des In-Kontakt-Tretens der Rastnasen 46 mit den Seitenwangen des Pedals nach innen aufeinander zu, bis die Rastnasen 46 mit den hier nicht gezeigten Ausnehmungen in den Seitenwangen des Pedals verrasten.

Es ist ersichtlich, daß der Aufnahmeabschnitt 18 zur formschlüssigen Aufnahme des Kugelkopfs 14 Druck- oder Zugkräfte vom Pedal auf die Kolbenstange 12 bzw. von der Kolbenstange 12 auf das Pedal übertragen kann, wobei der Kugelkopf 14 sich an dem Aufnahmeabschnitt 18 abstützt. Die dabei in den Grundkörper 16 unmittelbar über den Kugelkopf 14 bzw. mittelbar über das Formteil 24 eingeleiteten Kräfte werden ihrerseits in Zugrichtung über die Rastnasen 46 und in Druckrichtung über die Endfläche 40 des Grundkörpers 16 am Pedal abgestützt.

Zur Demontage der Vorrichtung 10 sind die Schenkel 30 des Grundkörpers 16 nach innen zu drücken, bis die Rastnasen 46 von den Ausnehmungen des Pedals freikommen. Sodann kann die Vorrichtung 10 an der Kolbenstange 12 aus dem Pedal herausgezogen werden. Wird nun die Kolbenstange 12 in Fig. 3 nach oben oder nach unten verschwenkt, bis die Kolbenstange 12 an dem Längsschlitz 52 des Formteils 24 bzw. dem Längsschlitz 50 des Grundkörpers 16 anschlägt, ergibt sich infolge der Hebelwirkung der Kolbenstange 12 eine in Fig. 3 nach oben gerichtete Kraftkomponente, die das Formteil 24 aus seiner Verrastung mit dem Grundkörper 16 löst. Schließlich kann der Kugelkopf 14 entlang des Fügekanals 22 aus dem Grundkörper 16 herausgeführt werden, ohne daß dabei größere Kräfte aufzubringen wären.

Es wird eine Vorrichtung zur gelenkigen Verbindung eines Betätigungsorgans mit einer einen Kugelkopf aufweisenden Betätigungsstange offenbart, die einen am Betätigungsorgan festlegbaren Grundkörper umfaßt. Der Grundkörper umgibt einen Aufnahmeabschnitt zur formschlüssigen Aufnahme des Kugelkopfs und hat einen Öffnungsbereich, durch den sich die Betätigungsstange im montierten Zustand der Vorrichtung hindurch erstreckt. Erfindungsgemäß ist der Aufnahmeabschnitt zweigeteilt, wobei der Grundkörper den einen Teil ausbildet, in den der Kugelkopf durch einen außerhalb des Öffnungsbereichs liegenden Fügekanal hindurch einführbar ist, während ein in den Fügekanal einsetzbares Formteil den anderen Teil des Aufnahmeabschnitts ausbildet. Im Ergebnis wird eine einfache Vorrichtung geschaffen, die eine zuverlässige und dauerhaft spielfreie bzw. -arme Verbindung zwischen Betätigungsorgan und Betätigungsstange gewährleistet.

### Bezugszeichenliste

- 10: Vorrichtung
- 12: Kolbenstange
- 14: Kugelkopf
- 16: Grundkörper
- 18: Aufnahmeabschnitt
- 20: Öffnungsbereich
- 22: Fügekanal
- 24: Formteil
- 26: Basis
- 28: Kugelkalottenabschnitt
- 30: Schenkel
- 32: obere Fläche
- 34: untere Fläche
- 36: Seitenfläche
- 38: Randabschnitt
- 40: Endfläche
- 42: Schräge
- 44: Querschlitz
- 46: Rastnase
- 48: Steg
- 50: Längsschlitz
- 52: Längsschlitz
- 54: Aussparung
- 56: Zylinderflächenabschnitt
- 58: Seitenfläche
- 60: Schräge
- 62: Schulter
- 64: Zylinderflächenabschnitt
- 66: Kugelkalottenabschnitt
- 68: obere Fläche
- 70: untere Fläche
- 72: Zylinderflächenabschnitt
- 74: Seitenfläche
- 76: Schräge
- 78: Profil
- 80: Fase
- 82: Fase
- 84: Vorsprung
- 86: Schräge
- 88: Flansch

- a: Betriebswinkelbereich
- b: Betriebswinkelbereich
- c: Schnittwinkel
- O: Öffnungsquerschnitt

## Patentansprüche

1. Vorrichtung (10) zur gelenkigen Verbindung eines Betätigungsorgans mit einer einen Kugelkopf (14) aufweisenden Betätigungsstange (12), mit einem am Betätigungsorgan festlegbaren Grundkörper (16), der einen Aufnahmeabschnitt (18) zur formschlüssigen Aufnahme des Kugelkopfs (14) umgibt und einen Öffnungsbereich (20) hat, durch den sich die Betätigungsstange (12) im montierten Zustand der Vorrichtung (10) hindurch erstreckt, **dadurch gekennzeichnet, daß** der Aufnahmeabschnitt (18) zweigeteilt ist, wobei der Grundkörper (16) den einen Teil ausbildet, in den der Kugelkopf (14) durch einen außerhalb des Öffnungsbereichs (20) liegenden Fügekanal (22) hindurch einführbar ist, während ein in den Fügekanal (22) einsetzbares Formteil (24) den anderen Teil des Aufnahmeabschnitts (18) ausbildet.

2. Vorrichtung (10) nach Anspruch 1, **dadurch gekennzeichnet, daß** der Grundkörper (16) und das Formteil (24) zur Ausbildung der Teile des Aufnahmeabschnitts (18) für den Kugelkopf (14) jeweils mit einem Kugelkalottenabschnitt (28, 66) versehen sind.

3. Vorrichtung (10) nach Anspruch 1 oder 2, **dadurch gekennzeichnet, daß** die lichte Weite des Fügekanals (22) im Grundkörper (16) an jeder Stelle des Fügekanals (22) größer oder gleich dem Durchmesser des Kugelkopfs (14) ist.

4. Vorrichtung (10) nach einem der vorhergehenden Ansprüche, **dadurch gekennzeichnet, daß** das Formteil (24) mittels einer Schnappverbindung am Grundkörper (16) festlegbar ist.

5. Vorrichtung (10) nach einem der vorhergehenden Ansprüche, **dadurch gekennzeichnet, daß** der Fügekanal (22) eine Aussparung (54) zur formschlüssigen Aufnahme des Formteils (24) aufweist.

6. Vorrichtung (10) nach Anspruch 5, **dadurch gekennzeichnet, daß** die Aussparung (54) zur formschlüssigen Aufnahme des Formteils (24) am offenen Ende des Fügekanals (22) ein nach innen vorspringendes Profil (78) aufweist, welches das Formteil (24) in seinem in den Fügekanal (22) eingesetzten Zustand hintergreift.

7. Vorrichtung (10) nach einem der vorhergehenden Ansprüche, **dadurch gekennzeichnet, daß** der Grundkörper (16) mit Rastnasen (46) versehen ist, die in Ausnehmungen des Betätigungsorgans einrastbar sind, um den Grundkörper (16) am Betätigungsorgan festzulegen.

8. Vorrichtung (10) nach einem der vorhergehenden Ansprüche, **dadurch gekennzeichnet, daß** der Grundkörper (16) in der Draufsicht (Fig. 6) gesehen im wesentlichen U-förmig ausgebildet ist, mit einer Basis (26), in der der eine Teil des Aufnahmeabschnitts (18) zur formschlüssigen Aufnahme des Kugelkopfs (14) ausgeformt ist, und zwei sich von der Basis (26) wegerstreckenden Schenkeln (30), welche die Rastnasen (46) tragen.

9. Vorrichtung (10) nach Anspruch 8, **dadurch gekennzeichnet, daß** die Basis (26) des Grundkörpers (16) auf der vom Aufnahmeabschnitt (18) zur formschlüssigen Aufnahme des Kugelkopfs (14) abgewandten Seite mit einem Querschlitz (44) versehen ist, welcher der Lagepositionierung des Grundkörpers (16) am Betätigungsorgan dient.

10. Vorrichtung (10) nach einem der vorhergehenden Ansprüche, **dadurch gekennzeichnet, daß** der Grundkörper (16) und/oder das Formteil (24) mit Vorsprüngen (84) versehen ist, die dem Ausgleich etwaiger Toleranzen dienen.

11. Vorrichtung (10) nach Anspruch 10, **dadurch gekennzeichnet, daß** die Vorsprünge (84) an dem Grundkörper (16) und/oder dem Formteil (24) auf ihrer beim Fügen zum Betätigungsorgan dem Betätigungsorgan zugewandten Seite mit jeweils einer Schräge (86) versehen sind.

12. Vorrichtung (10) nach einem der vorhergehenden Ansprüche, **dadurch gekennzeichnet, daß** der Grundkörper (16) und/oder das Formteil (24) aus Kunststoff spritzgegossen ist.

## Claims

1. Device (10) for articulated connection between a control element and a control rod (12) comprising a ball head (14), with a main body (16), attachable at the control element, enveloping a locating section (18) for positive location of the ball head (14) and having an opening section (20) through which the control rod (12) extends when the device (10) is assembled, **characterized in that** the locating section (18) is in two parts, wherein the main body (16) forms one part into which the ball head (14) can be introduced through a joint duct (22) located outside the opening area (20), whilst a molding (24) insertable into the joint duct (22) forms the other part of the locating section (18).

2. Device (10) according to Claim 1, **characterized in that** the main body (16) and the molding (24) for forming the parts of the locating section (18) for the ball head (14) are each provided with a spherical cup section (28, 66).

3. Device (10) according to Claim 1 or 2, **characterized in that** the inside diameter of the joint duct (22) in the main body (16) at each point of the joint duct (22) is larger than or equal to the diameter of the ball head (14).

4. Device (10) according to one of the preceding Claims, **characterized in that** the molding (24) can be fixed at the main body (16) by means of a snap connection.

5. Device (10) according to one of the preceding Claims, **characterized in that** the joint duct (22) has a recess (54) for positive location of the molding (24).

6. Device (10) according to Claim 5, **characterized in that** the recess (54) for positive location of the molding (24) has, at the open end of the joint duct (22), a profile (78) protruding inwards and engaging the molding (24) round the back in its position in the joint duct (22).

7. Device (10) according to one of the preceding Claims, **characterized in that** the main body (16) has locating lugs (46) engageable into recesses in the control element to fix the main body (16) at the control element.

8. Device (10) according to one of the preceding Claims, **characterized in that** the main body (16) is generally U-shaped in the plan view (Figure 6), with a base (26) in which one part of the locating section (18) for positive location of the ball head (14) is formed, and two arms (30) carrying the locating lugs (46), extending from the base (26).

9. Device (10) according to Claim 8, **characterized in that** the base (26) of the main body (16) has, on the side facing away from the locating section (18) for positive location of the ball head (14), a traverse slit (44) serving the purpose of positioning the main body (16) at the control element.

10. Device (10) according to one of the preceding Claims, **characterized in that** the main body (16) and/or the molding (24) has protrusions (84) serving the purpose of compensating any tolerances.

11. Device (10) according to Claim 10, **characterized in that** the protrusions (84) at the main body (16) and/or the molding (24) each have a bevel (86) on their side facing the control element when it is being joined to the control element.

12. Device (10) according to one of the preceding Claims, **characterized in that** the main body (16) and/or the molding (24) are injection molded from plastic.

## Revendications

1. Dispositif (10) pour relier de manière articulée un organe d'actionnement avec une tige d'actionnement (12) présentant une tête sphérique (14), comportant un corps de base (16) susceptible d'être immobilisé sur l'organe d'actionnement, lequel entoure un tronçon de réception (18) destiné à recevoir la tête sphérique (14) par coopération de formes et présente une région d'ouverture (20) à travers laquelle la tige d'actionnement (12) s'étend à l'état monté du dispositif (10), **caractérisé en ce que** le tronçon de réception (18) est divisé en deux, le corps de base (16) réalisant une partie dans laquelle la tête sphérique (14) peut être introduite à travers un canal d'assemblage (22) situé à l'extérieur de la région d'ouverture (20), tandis qu'une partie moulée (24) qui peut être insérée dans le canal d'assemblage (22) réalise l'autre partie du tronçon de réception (18).

2. Dispositif (10) selon la revendication 1, **caractérisé en ce que** le corps de base (16) et la partie moulée (24) sont pourvus chacun d'un tronçon en calotte sphérique (28, 66) pour réaliser les parties du tronçon de réception (18) pour la tête sphérique (14).

3. Dispositif (10) selon l'une ou l'autre des revendications 1 et 2, **caractérisé en ce que** largeur intérieure du canal d'assemblage (22) dans le corps de base (16) est, à chaque emplacement du canal d'assemblage (22), supérieure ou égale au diamètre de la tête sphérique (14).

4. Dispositif (10) selon l'une des revendications précédentes, **caractérisé en ce que** la pièce moulée (24) peut être immobilisée sur le corps de base (16) au moyen d'une liaison par encliquetage.

5. Dispositif (10) selon l'une des revendications précédentes, **caractérisé en ce que** le canal d'assemblage (22) présente une échancrure (54) pour recevoir la pièce moulée (24) par coopération de formes.

6. Dispositif (10) selon la revendication 5, **caractérisé en ce que** l'échancrure (54) pour recevoir la pièce moulée (24) par coopération de formes présente à l'extrémité ouverte du canal d'assemblage (22) un profil (78) faisant saillie vers l'intérieur qui s'engage derrière la pièce moulée (24) dans son état d'insertion dans le canal d'assemblage (22).

7. Dispositif (10) selon l'une des revendications précédentes, **caractérisé en ce que** le corps de base (16) est pourvu d'ergots d'enclenchement (46) qui peuvent s'enclencher dans des évidements de l'organe d'actionnement pour immobiliser le corps de base (16) sur l'organe d'actionnement.

8. Dispositif (10) selon l'une des revendications précédentes, **caractérisé en ce que** le corps de base (16) vu de dessus (fig. 6) est réalisé sensiblement en forme de U, avec une base (26) dans laquelle est conformée une partie du tronçon de réception (18) pour recevoir la tête sphérique (14) par coopération de formes, et deux branches (30) s'étendant en éloignement de la base (26), qui portent les ergots d'enclenchement (46).

9. Dispositif (10) selon la revendication 8, **caractérisé en ce que** sur le côté détourné du tronçon de réception (18) pour recevoir la tête sphérique (14) par coopération de formes, la base (26) du corps de base (16) est pourvue d'une fente transversale (44) qui sert à positionner le corps de base (16) sur l'organe d'actionnement.

10. Dispositif (10) selon l'une des revendications précédentes, **caractérisé en ce que** le corps de base (16) et/ou la pièce moulée (24) est pourvu(e) de saillies (84) qui servent à compenser des tolérances éventuelles.

11. Dispositif (10) selon la revendication 10, **caractérisé en ce que** les saillies (84) sur le corps de base et/ou la pièce moulée (24) sont pourvues d'un chanfrein (86) respectif sur leur côté tourné vers l'organe d'actionnement lors de l'assemblage pour former l'organe d'actionnement.

12. Dispositif (10) selon l'une des revendications précédentes, **caractérisé en ce que** le corps de base (16) et/ou la pièce moulée est moulé(e) par injection en matière plastique.
